# EUROPEAN PATENT APPLICATION

(11) **EP 4 804 723 A1**
(43) Date of publication of application: **09.09.2026**
(21) Application number: 26151932.6
(22) Date of filing: 14.01.2026
(51) Int. Cl.: H05B 1/02, H05B 6/64, G01K 1/14

(54) **COOKING DEVICE**

(30) Priority: 05.03.2025 CN 202510259566
(71) Applicant: Shenzhen Typhur Technology Co., Ltd, Shenzhen, Guangdong 518067 (CN)
(72) Inventor: ZHANG, Zirui, Shenzhen, Guangdong, 518067 (CN); HUANG, Zhanbin, Shenzhen, Guangdong, 518067 (CN); CHEN, Xuchao, Shenzhen, Guangdong, 518067 (CN)
(74) Representative: KIPA AB

(57) **Abstract**

A cooking apparatus, comprising: a housing; a heating assembly, configured to heat food in the cooking cavity; a wireless communication module, configured to establish a wireless communication connection with a wireless temperature probe; a charging assembly, configured to couple with the wireless temperature probe; a power module, comprising an input terminal, a first power supply terminal, and a second power supply terminal, the input terminal of the power module is configured to connect to alternating current mains, and the power module is configured to transform the alternating current mains to obtain a first supply voltage and a second supply voltage; the first power supply terminal outputs the first supply voltage to supply power to the wireless communication module, and the second power supply terminal outputs the second supply voltage to the charging assembly, and charges the wireless temperature probe when the charging assembly is coupled with the wireless temperature probe.

## Description

### Technical Field

The present application relates to the field of cooking technology, and specifically to a cooking apparatus.

### Background Art

A cooking apparatus generally achieves cooking of food by heating the food. For example, a cooking apparatus is usually provided with a heating assembly, and the food is heated by the heating assembly to achieve cooking.

In general, the cooking apparatus can meet the cooking needs of food by directly controlling heating-related parameters of the heating assembly, such as controlling the heating temperature, heating time, etc., of the heating assembly. However, for some foods with high cooking temperature requirements, it is difficult to meet their cooking needs. To this end, the cooking apparatus is usually used in conjunction with a temperature probe, which is configured to detect the temperature of the food, so that the cooking apparatus can control the heating-related parameters of the heating assembly based on the temperature of the food, thereby meeting the cooking needs of foods with high temperature requirements.

Temperature probes comprise wired temperature probes and wireless temperature probes, the wired temperature probe is connected to the cooking apparatus via a cable, but the cable length limits the user's operation, and the cable is prone to contamination by oil stains or food residues, making it difficult to clean. The wireless temperature probe needs to be paired with a probe base, which is then connected to the cooking apparatus, but the probe base has a high cost and increases maintenance costs during use. To this end, new technical solutions need to be proposed.

### Summary

The main technical problem solved by the present application is that the user experience is not good enough in the process of using a wireless temperature probe.

According to a first aspect, an embodiment provides a cooking apparatus, comprising:
a housing, configured to enclose and form a cooking cavity;
a heating assembly, configured to heat food in the cooking cavity;
a wireless communication module, configured to establish a wireless communication connection with a wireless temperature probe to receive temperature detection information transmitted by the wireless temperature probe, the temperature detection information is configured to control a heating state of the heating assembly;
a charging assembly, configured to couple with the wireless temperature probe;
a power module, comprising an input terminal, a first power supply terminal, and a second power supply terminal, the input terminal of the power module is configured to connect to alternating current mains, and the power module is configured to transform the alternating current mains to obtain a first supply voltage and a second supply voltage; the first power supply terminal outputs the first supply voltage to supply power to the wireless communication module, and the second power supply terminal outputs the second supply voltage to the charging assembly, and charges the wireless temperature probe when the charging assembly is coupled with the wireless temperature probe.

In some embodiments, the cooking apparatus further comprises a first circuit board and at least one second circuit board, the power module and the wireless communication module are defined on the at least one second circuit board, and the charging assembly is separately defined on the first circuit board, or a portion of the power module and the wireless communication module is defined on the at least one second circuit board, and another portion of the power module and the wireless communication module and the charging assembly are defined on the first circuit board; the first circuit board and the at least one second circuit board are respectively mounted at different positions of the housing.

In some embodiments, the housing has a support portion, and the support portion is configured to place the wireless temperature probe; a position of the support portion corresponds to a position of the first circuit board, such that the charging assembly can couple with the wireless temperature probe when the wireless temperature probe is placed on the support portion.

In some embodiments, the support portion is defined on an outer surface of the housing, such that the wireless temperature probe can be placed on the outer surface of the housing.

In some embodiments, an area of the first circuit board is smaller than an area of the second circuit board.

In some embodiments, the charging assembly comprises a positive electrode connector and a negative electrode connector, the positive electrode connector is connected to the second power supply terminal, the negative electrode connector is grounded, and the second power supply terminal charges the wireless temperature probe when the positive electrode connector and the negative electrode connector are respectively connected to the wireless temperature probe;
or,
the charging assembly comprises a wireless charging module and a wireless charging coil, the wireless charging module is respectively connected to the second power supply terminal and the wireless charging coil, and the wireless charging module drives the wireless charging coil to charge the wireless temperature probe when the wireless charging coil is coupled with the wireless temperature probe.

In some embodiments, the charging assembly further comprises an in-position detection member, the in-position detection member is connected to the power module, and generates a first signal when in contact with the wireless temperature probe, and generates a second signal when separated from the wireless temperature probe, the power module charges the wireless temperature probe in response to the first signal, and stops charging the wireless temperature probe in response to the second signal.

In some embodiments, the power module comprises a rectifier circuit and a voltage conversion circuit, the rectifier circuit is configured to rectify the alternating current mains and output direct current, and the voltage conversion circuit transforms the direct current and respectively outputs the first supply voltage and the second supply voltage; the first supply voltage and the second supply voltage are the same, and the first power supply terminal and the second power supply terminal are the same or different, or the first supply voltage and the second supply voltage are different, and the first power supply terminal and the second power supply terminal are different.

In some embodiments, the voltage conversion circuit comprises a DC-DC conversion module and a linear voltage regulator module, the DC-DC conversion module is configured to transform the direct current and output a first voltage, the linear voltage regulator module is configured to transform the first voltage and output a second voltage and/or a third voltage, and the first supply voltage and the second supply voltage are any two of the first voltage, the second voltage, and the third voltage.

According to a second aspect, an embodiment provides a cooking apparatus, comprising:
a housing, configured to enclose and form a cooking cavity; the housing has a support portion, and the support portion is configured to place a wireless temperature probe;
a heating assembly, configured to heat food in the cooking cavity;
a communication module, configured to acquire temperature detection information detected by the wireless temperature probe, the temperature detection information controls a heating state of the heating assembly;
a charging assembly, capable of coupling with the wireless temperature probe when the wireless temperature probe is placed on the support portion;
a power module, comprising an input terminal and a second power supply terminal, the input terminal of the power module is configured to connect to alternating current mains, the power module is configured to transform the alternating current mains to obtain a second supply voltage, and the second power supply terminal outputs the second supply voltage to the charging assembly, and charges the wireless temperature probe when the charging assembly is coupled with the wireless temperature probe.

According to the cooking apparatus of the above embodiments, the power module transforms the alternating current mains to obtain a first supply voltage and a second supply voltage. The first supply voltage is configured to supply power to the wireless communication module, and the wireless communication module is configured to establish a wireless communication connection with the wireless temperature probe. The second supply voltage is configured to output to the charging assembly to charge the wireless temperature probe when the charging assembly is coupled with the wireless temperature probe. Since the wireless communication module and the charging assembly are integrated into the cooking apparatus, the cooking apparatus can directly communicate with the wireless temperature probe and charge the wireless temperature probe. This allows the user to no longer need to separately manage an external probe base and charging cable, making the design of the cooking apparatus and the probe system more compact, the interaction between the cooking apparatus and the wireless temperature probe smoother, and improving the overall user experience.

### Brief Description of the Drawings

Figure 1 is a schematic structural diagram of a cooking apparatus in one embodiment;
Figure 2 is a schematic structural diagram of a cooking apparatus in another embodiment;
Figure 3 is a schematic structural diagram of a power module in one embodiment;
Figure 4 is a schematic structural diagram of a voltage conversion circuit in one embodiment;
Figure 5 is a schematic structural diagram of a charging assembly in one embodiment;
Figure 6 is a schematic structural diagram of a cooking apparatus in yet another embodiment.

### Detailed Description

The present application is further described in detail below through specific embodiments in conjunction with the accompanying drawings. Similar elements in different embodiments are assigned associated similar element numbers. In the following embodiments, many detailed descriptions are provided to enable the present application to be better understood. However, those skilled in the art can readily recognize that some features may be omitted in different situations, or may be replaced by other elements, materials, or methods. In some cases, some operations related to the present application are not shown or described in the specification to avoid overwhelming the core part of the present application with excessive descriptions, and for those skilled in the art, a detailed description of these related operations is not necessary, as they can fully understand the related operations based on the description in the specification and general technical knowledge in the art.

In addition, the features, operations, or characteristics described in the specification may be combined in any appropriate manner to form various embodiments. At the same time, the steps or actions in the method descriptions may also be exchanged or adjusted in sequence in a manner obvious to those skilled in the art. Therefore, the various sequences in the specification and drawings are only for clearly describing a certain embodiment and do not imply a necessary sequence unless otherwise specified that a certain sequence must be followed.

The numbering of components herein, such as "first," "second," etc., is only configured to distinguish the described objects and does not have any sequential or technical meaning. The terms "connection" and "coupling" in the present application, unless otherwise specified, comprise both direct and indirect connections (couplings).

In some embodiments of the present application, on one hand, the wireless communication module and the charging assembly are integrated into the cooking apparatus, so that the cooking apparatus can directly communicate with the wireless temperature probe and charge the wireless temperature probe. This allows the user to no longer need to separately manage an external probe base and charging cable, making the design of the cooking apparatus and the probe system more compact, the interaction between the cooking apparatus and the wireless temperature probe smoother, and improving the overall user experience. On the other hand, the charging assembly is defined on a separate circuit board to facilitate coupling with the wireless temperature probe while minimizing contamination of other modules and circuit boards. In addition, the housing can place the wireless temperature probe based on the support portion on the outer surface, making the wireless temperature probe better form an integrated device with the cooking apparatus, and avoiding contamination inside the housing.

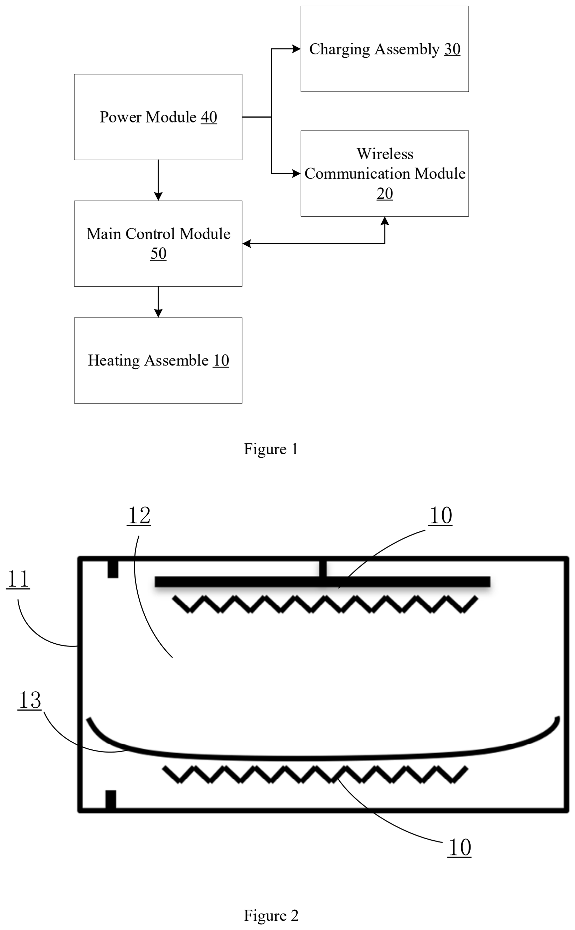

In some embodiments, a cooking apparatus is provided, which is configured to heat food to achieve cooking, and the cooking apparatus can also wirelessly connect with a wireless temperature probe and charge the wireless temperature probe. The cooking apparatus may be an air fryer, an oven, a BBQ grill, etc. Please refer to Figures 1 and 2, the cooking apparatus comprises a housing 11, a heating assembly 10, a wireless communication module 20, a charging assembly 30, and a power module 40, which are described in detail below.

The housing 11 is configured to enclose and form a cooking cavity 12, and the cooking cavity 12 is used for placing food.

Please refer to Figure 2, in some embodiments, the cooking cavity 12 may comprise one cooking area or multiple different cooking areas. In some embodiments, different cooking areas may be respectively used for placing food to be cooked to cook different foods separately, for example, different cooking areas may be two independent areas, and the two independent areas may respectively be two independent heating cavities, or one may be a heating cavity and the other may be a heating pot or a heating plate. In some embodiments, different cooking areas may also be used for cooking the same food to be cooked, for example, dividing the cooking cavity 12 into an upper cooking area and a lower cooking area, the upper cooking area is used for cooking the upper side of the food, and the lower cooking area is used for cooking the lower side of the food, thereby cooking both sides of the food separately. Alternatively, a heating cavity may be divided into a left part or a right part, and the specific division method is not limited.

Please refer to Figure 2, in some embodiments, the cooking apparatus may further comprise a cooking pot body 13, the cooking pot body 13 is set in the cooking cavity 12, and food may be placed on the upper surface of the cooking pot body 13. In some embodiments, the cooking pot body 13 has a handle for the cooking pot body to be drawably set in the cooking cavity 12, for example, drawing the cooking pot body out from the cooking cavity 12, placing food on the cooking pot body, and then pushing the cooking pot body into the cooking cavity 12.

The heating assembly 10 is configured to heat food in the cooking cavity 12.

In some embodiments, the heating assembly 10 is set in the cooking cavity 12 to heat the food. In some embodiments, the heating assembly 10 may comprise one or more, different heating assemblies 10 may use the same heating method or different heating methods, and may also select one or more suitable heating methods according to different cooking areas. The heating method may use electrical energy provided by an external power source or an internal power source to generate heat to heat the cooking area, for example, electrical energy may be configured to heat a heating element made of nickel-chromium-iron alloy wire, so that the cooking area can be directly heated by far-infrared rays generated by the heated heating element. For example, electrical energy may be configured to form a magnetic field in a coil, so that the cooking area magnetized by the formed magnetic field can be heated. For example, electrical energy may be configured to heat an electric heating wire, so that the heated electric heating wire directly heats a cooking pot body formed of a heat-conductive material through heat conduction or indirectly heats the cooking pot body, thereby heating the food on the cooking pot body.

In some embodiments, the heating assembly 10 comprises a heating member, and the heating member is configured to generate heat to heat the cooking area. In some embodiments, the heating assembly 10 comprises a fan member and a heating member, the heating member is configured to generate heat, and the fan member is configured to drive airflow to heat the cooking area, for example, to form hot air to heat the cooking area.

The wireless communication module 20 is configured to establish a wireless communication connection with the wireless temperature probe to receive temperature detection information transmitted by the wireless temperature probe.

In some embodiments, the wireless communication module 20 may use one or more of modules with wireless communication functions such as a WiFi module, a Bluetooth module, a ZigBee module, etc. In some embodiments, the wireless temperature probe is configured to contact the food to detect the temperature of the food and transmit the acquired temperature detection information to the wireless communication module 20. The cooking apparatus can control the heating state of the heating assembly based on the temperature detection information. Controlling the heating state of the heating assembly may also be one or both of controlling the on/off of the heating assembly 10 and adjusting the heating-related parameters when the heating assembly 10 performs heating, and the heating-related parameters comprise heating temperature, heating time, heating power, etc., for example, when the temperature of the food is lower than the target temperature, one or more of the heating temperature, heating power, and heating time of the heating assembly 10 may be increased, and conversely, when the temperature of the food is higher than the target temperature, one or more of the heating temperature, heating power, and heating time of the heating assembly 10 may be decreased, so as to meet the cooking temperature requirements of the food. In some embodiments, the wireless communication module 20 comprises a radio frequency receiving circuit, the radio frequency receiving circuit is configured to receive wireless signals sent by the wireless temperature probe, and the wireless communication module 20 and/or the main control module 50 is also configured to decode the wireless signals received by the radio frequency receiving circuit to obtain the temperature detection information of the food and transmit it to the main control module 50 or a display screen assembly, the main control module 50 controls the cooking state of the cooking apparatus or the heating state of the heating assembly 10 based on the temperature detection information; the display screen assembly displays the temperature detection information, for example, displays a specific temperature value. The frequency band received by the radio frequency receiving circuit is 0-6 GHz, or the wavelength range is greater than 5 cm, and the interval between data packets of every two wireless signals received is more than 1 ms.

The power module 40 is configured to transform alternating current mains to output a suitable supply voltage.

In some embodiments, the power module 40 has an input terminal, a first power supply terminal, and a second power supply terminal. The input terminal of the power module 40 is configured to connect to alternating current mains, the power module 40 is configured to transform the alternating current mains to obtain a first supply voltage and a second supply voltage, the first power supply terminal of the power module 40 outputs the first supply voltage to supply power to the wireless communication module 20, and the second power supply terminal of the power module 40 outputs the second supply voltage to the charging assembly 30, and charges the wireless temperature probe when the charging assembly 30 is coupled with the wireless temperature probe.

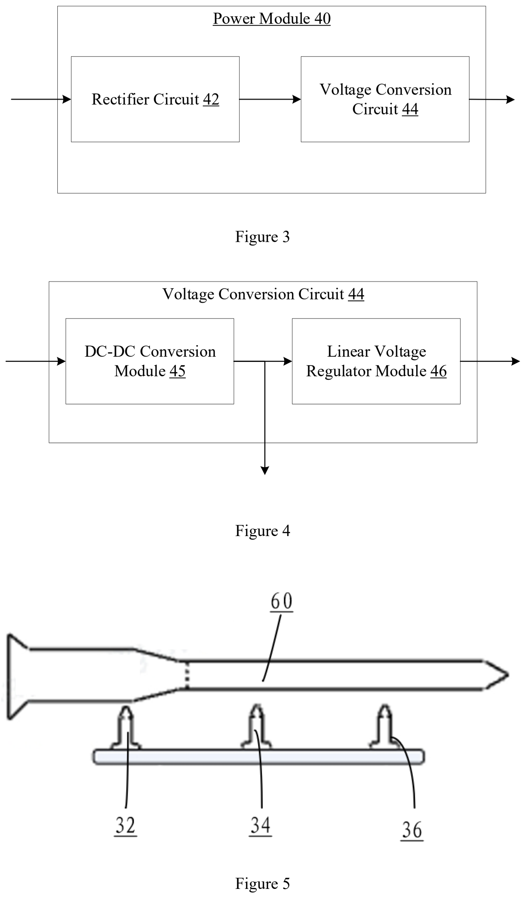

Please refer to Figure 3, in some embodiments, the power module 40 comprises a rectifier circuit 42 and a voltage conversion circuit 44, the rectifier circuit 42 is configured to rectify the alternating current mains and output direct current, and the voltage conversion circuit 44 transforms the direct current and respectively outputs the first supply voltage and the second supply voltage. The rectifier circuit 42 may be implemented based on a diode rectifier bridge, which is not repeated here. The voltage conversion circuit 44 may be implemented based on modules that perform voltage conversion such as a DC-DC conversion module, a linear voltage regulator module, a boost module, a buck module, etc., which is not repeated here.

In some embodiments, the first supply voltage and the second supply voltage are the same, and the first power supply terminal and the second power supply terminal are the same or different. In some embodiments, the first supply voltage and the second supply voltage are different, and the first power supply terminal and the second power supply terminal are different.

Please refer to Figure 4, in some embodiments, the voltage conversion circuit 44 comprises a DC-DC conversion module 45 and a linear voltage regulator module 46, the DC-DC conversion module 45 is configured to transform the direct current output by the rectifier circuit 42 and output a first voltage, the linear voltage regulator module 46 is configured to transform the first voltage and output a second voltage and/or a third voltage, and the first supply voltage and the second supply voltage are any two of the first voltage, the second voltage, and the third voltage. In some embodiments, the first voltage, the second voltage, and the third voltage may be the same or different.

In some embodiments, the linear voltage regulator module 46 comprises one linear voltage regulator circuit, and at this time, the linear voltage regulator circuit transforms the first voltage and outputs the second voltage or the third voltage. In some embodiments, the linear voltage regulator module 46 comprises two linear voltage regulator circuits, and the two linear voltage regulator circuits may be in parallel, at this time, the two linear voltage regulator circuits respectively transform the first voltage and respectively output the second voltage and the third voltage. The two linear voltage regulator circuits may be in series, at this time, one linear voltage regulator circuit transforms the first voltage and outputs the second voltage, and the other linear voltage regulator circuit transforms the second voltage and outputs the third voltage.

In the above embodiments, according to the actual supply voltage requirements, the voltage conversion circuit 44 comprises one or more modules that perform voltage conversion to output one or more different supply voltages. For example, in the case where the supply voltages required by the wireless communication module 20 and the charging assembly 30 are the same, they may be respectively supplied based on the same DC-DC conversion module 45 or linear voltage regulator module 46, for example, in the case where the supply voltages required by the wireless communication module 20 and the charging assembly 30 are different, they may be respectively supplied based on the DC-DC conversion module 45 and the linear voltage regulator module 46, or based on different linear voltage regulator modules 46, which is not repeated here.

In some embodiments, the voltage conversion circuit 44 may also be configured to supply power to other modules, if the supply voltage of other modules is the same as the first supply voltage and the second supply voltage, it may directly supply power to them. If the supply voltage of other modules is different from both the first supply voltage and the second supply voltage, the voltage conversion circuit 44 may also comprise additional modules for voltage conversion to supply power to other modules. For example, the voltage conversion circuit 44 comprises a DC-DC conversion module 45, a first linear voltage regulator module, and a second linear voltage regulator module, the DC-DC conversion module 45 is configured to output a first voltage to supply power to the main control module 50, the first linear voltage regulator module 46 converts the first voltage to a second voltage to supply power to the wireless communication module 20, and the second linear voltage regulator module 46 converts the second voltage to a third voltage to supply power to the charging assembly 30. In some embodiments, the first voltage is 5V, which can supply power to the main control module 50, the second voltage is 3.3V, which serves as the first supply voltage to supply power to the wireless communication module 20, and the third voltage is 3V, which serves as the second supply voltage to supply power to the charging assembly 30.

The charging assembly 30 is configured to couple with the wireless temperature probe for charging the wireless temperature probe.

Please refer to Figure 5, in some embodiments, the charging assembly 30 comprises a positive electrode connector 32 and a negative electrode connector 34, the positive electrode connector 32 is connected to the second power supply terminal of the power module 40, the negative electrode connector 34 is grounded, and the second power supply terminal of the power module 40 charges the wireless temperature probe 60 when the positive electrode connector 32 and the negative electrode connector 34 are respectively connected to the wireless temperature probe 60. The wireless temperature probe 60 is provided with corresponding positive electrode contact terminal and negative electrode contact terminal, and the positive electrode connector 32 and the negative electrode connector 34 are respectively configured to connect to the positive electrode contact terminal and the negative electrode contact terminal. In some embodiments, the positive electrode connector 32 and the negative electrode connector 34 may be implemented based on conductive materials for conduction. In some embodiments, to ensure the stability of contact between the positive electrode connector 32 and the negative electrode connector 34 and the wireless temperature probe, the positive electrode connector 32 and the negative electrode connector 34 may have certain elasticity, so that they press against the wireless temperature probe based on elasticity, thereby improving contact stability, for example, the positive electrode connector 32 and the negative electrode connector 34 may respectively be connectors such as springs, spring pieces, pogo pins, etc.

In some embodiments, the charging assembly 30 comprises a wireless charging module and a wireless charging coil, the wireless charging module is respectively connected to the second power supply terminal and the wireless charging coil, and the wireless charging module drives the wireless charging coil to charge the wireless temperature probe when the wireless charging coil is coupled with the wireless temperature probe. The wireless temperature probe is provided with a charging coil and a charging module corresponding to the charging assembly 30, and when the wireless charging coil is coupled with the charging coil of the wireless temperature probe, the wireless charging module drives the wireless charging coil to charge the wireless temperature probe based on the electromagnetic induction principle or the magnetic resonance principle. In some embodiments, the wireless charging module may be implemented based on an integrated wireless charging chip or based on discrete devices, which is not repeated here.

Please refer to Figure 5, in some embodiments, the charging assembly 30 further comprises an in-position detection member 36, the in-position detection member 36 is connected to the power module 40, and generates a first signal when in contact with the wireless temperature probe, and generates a second signal when separated from the wireless temperature probe, and the power module 40 charges the wireless temperature probe in response to the first signal, and stops charging the wireless temperature probe in response to the second signal. The first signal and the second signal may respectively be low level and high level, so that whether the wireless temperature probe is in the charging position can be detected based on the in-position detection member 36. In some embodiments, the in-position detection member 36 may also be a connector such as a spring, a spring piece, a pogo pin, etc. In some embodiments, the first signal and the second signal may be transmitted by the wireless communication module 20 to a user terminal, such as a mobile phone, or may be directly transmitted to the main control module 50. The user terminal may display that the wireless temperature probe is in a charging state in response to the first signal, and display power information of the wireless temperature probe, such as displaying the current power, in response to the second signal. The main control module 50 may control the display screen assembly to display that the wireless temperature probe is in a charging state in response to the first signal, and control the display screen assembly to display power information of the wireless temperature probe, such as displaying the current power, in response to the second signal.

In the above embodiments, the wireless communication module 20 and the charging assembly 30 are integrated into the cooking apparatus, so that the cooking apparatus can directly communicate with the wireless temperature probe and charge the wireless temperature probe. Since the external probe base is removed, the wireless temperature probe communicates in real time with the cooking apparatus through wireless signals, making the design of the cooking apparatus and the probe system more compact, the interaction between the cooking apparatus and the wireless temperature probe smoother, improving the overall user experience, and further optimizing the operation process. Moreover, the wireless temperature probe can be directly charged through the cooking apparatus, making the charging process more convenient. In addition, the user no longer needs to separately manage the external probe base and charging cable, and also avoids the risk that the wireless temperature probe cannot be used due to the probe base being out of power or the probe base being lost or damaged.

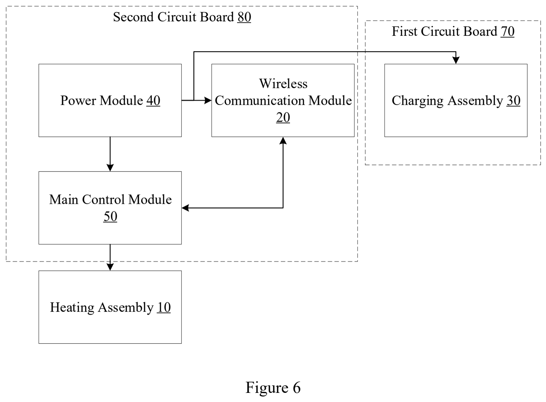

Please refer to Figure 6, in some embodiments, the cooking apparatus further comprises a first circuit board 70 and at least one second circuit board 80. The first circuit board 70 and the at least one second circuit board 80 are provided with lines for electrical connections between various modules in the cooking apparatus to achieve signal transmission between modules or power supply to various modules.

Please refer to Figure 6, in some embodiments, the power module 40 and the wireless communication module 20 are defined on the at least one second circuit board 80, and the charging assembly 30 is separately defined on the first circuit board 70. For example, the power module 40 and the wireless communication module 20 may be respectively defined on different second circuit boards 80, or may be defined on the same second circuit board 80. In this embodiment, since the charging assembly 30 needs to couple with the wireless temperature probe, after the charging assembly 30 is separately defined on the first circuit board 70, on the one hand, the first circuit board 70 is only configured to define the charging assembly 30, so that the area of the first circuit board 70 can be smaller, for example, smaller than the area of the second circuit board 80, thereby comprising more position choices when defining the first circuit board 70 on the housing 11, for example, it can be defined at a position more convenient for coupling with the wireless temperature probe. On the other hand, when the charging assembly 30 couples with the wireless temperature probe, it may be contaminated by food residues such as oil stains on the wireless temperature probe, so after the charging assembly 30 is separately defined on the first circuit board 70, contamination of other circuit boards and other modules can be avoided. The first circuit board 70 and each second circuit board 80 are respectively mounted at different positions of the housing 11.

In some embodiments, a portion of the power module 40 and the wireless communication module 20 may be defined on the at least one second circuit board 80, and another portion of the power module 40 and the wireless communication module 20 and the charging assembly 30 may be defined on the first circuit board 70. In this embodiment, in addition to defining the charging assembly 30, the first circuit board 70 may also define some other circuits, such as defining all or part of the voltage conversion circuit 44, as long as the area of the first circuit board 70 is smaller than the area of each second circuit board 80, so that the first circuit board 70 can still have more position choices on the housing 11 based on small size, and minimize contamination to other modules. The first circuit board 70 and each second circuit board 80 are respectively mounted at different positions of the housing 11.

In some embodiments, the housing 11 has a support portion, and the support portion is configured to place the wireless temperature probe. The position of the support portion corresponds to the position of the first circuit board 70, such that the charging assembly 30 can couple with the wireless temperature probe when the wireless temperature probe is placed on the support portion.

In some embodiments, the support portion is defined on an outer surface of the housing 11, such that the wireless temperature probe can be placed on the outer surface of the housing 11. The outer surface of the housing 11 may be the outer surface of the top of the housing 11 or the outer surface of the side of the housing 11, and the support portion may be defined on a part or all of the outer surface thereof. In this embodiment, the support portion is defined on the outer surface of the housing 11 to minimize contamination of the interior of the housing 11 by food residues such as oil stains from the wireless temperature probe, and the outer surface of the housing 11 is relatively easy to clean after contamination. In some embodiments, when the charging assembly 30 comprises a positive electrode connector 32 and a negative electrode connector 34, the positive electrode connector 32 and the negative electrode connector 34 may be exposed on the housing 11 and connected to the wireless temperature probe placed on the support portion, for example, defining a part or all of the outer surface of the top of the housing 11 as the support portion, and the support portion is provided with through holes for exposing the positive electrode connector 32 and the negative electrode connector 34, and when the wireless temperature probe is placed on the support portion, the wireless temperature probe is supported by the support portion and presses the positive electrode connector 32 and the negative electrode connector 34, thereby connecting to the positive electrode connector 32 and the negative electrode connector 34.

In the above embodiments, the charging assembly 30 is defined on a separate circuit board, so that the position of the charging assembly 30 in the housing 11 can be better defined to facilitate coupling with the wireless temperature probe, while minimizing contamination of other modules and circuit boards. In addition, the housing 11 can place the wireless temperature probe based on the support portion on the outer surface, making the wireless temperature probe better form an integrated device with the cooking apparatus, avoiding contamination inside the housing 11, and the outer surface is more convenient for cleaning food residues such as oil stains from the wireless temperature probe.

Those skilled in the art can understand that all or part of the functions of the various methods in the above embodiments may be implemented by hardware or by a computer program. When all or part of the functions in the above embodiments are implemented by a computer program, the program may be stored in a computer-readable storage medium, and the storage medium may comprise: read-only memory, random access memory, magnetic disk, optical disk, hard disk, etc., and the program is executed by a computer to achieve the above functions. For example, the program is stored in the memory of the device, and when the processor executes the program in the memory, all or part of the above functions can be achieved. In addition, when all or part of the functions in the above embodiments are implemented by a computer program, the program may also be stored in a storage medium such as a server, another computer, a magnetic disk, an optical disk, a flash disk, or a mobile hard disk, saved to the memory of a local device by downloading or copying, or the system of the local device is version updated, and when the processor executes the program in the memory, all or part of the functions in the above embodiments can be achieved.

The above uses specific examples to illustrate the present application, which are only configured to help understand the present application and are not configured to limit the present application. For those skilled in the art to which the present application belongs, several simple deductions, modifications, or substitutions may also be made according to the idea of the present application.

## Claims

1. A cooking apparatus, comprising:
a housing, configured to enclose and form a cooking cavity;
a heating assembly, configured to heat food in the cooking cavity;
a wireless communication module, configured to establish a wireless communication connection with a wireless temperature probe to receive temperature detection information transmitted by the wireless temperature probe, the temperature detection information is configured to control a heating state of the heating assembly;
**characterized in that** a charging assembly, configured to couple with the wireless temperature probe;
a power module, comprising an input terminal, a first power supply terminal, and a second power supply terminal, the input terminal of the power module is configured to connect to alternating current mains, and the power module is configured to transform the alternating current mains to obtain a first supply voltage and a second supply voltage; the first power supply terminal outputs the first supply voltage to supply power to the wireless communication module, and the second power supply terminal outputs the second supply voltage to the charging assembly, and charges the wireless temperature probe when the charging assembly is coupled with the wireless temperature probe.

2. The cooking apparatus according to claim 1, **characterized in that** the cooking apparatus further comprises a first circuit board and at least one second circuit board, the power module and the wireless communication module are defined on the at least one second circuit board, and the charging assembly is separately defined on the first circuit board; or a portion of the power module and the wireless communication module is defined on the at least one second circuit board, and another portion of the power module and the wireless communication module and the charging assembly are defined on the first circuit board; the first circuit board and the at least one second circuit board are respectively mounted at different positions of the housing.

3. The cooking apparatus according to claim 2, **characterized in that** the housing has a support portion, and the support portion is configured to place the wireless temperature probe; a position of the support portion corresponds to a position of the first circuit board, such that the charging assembly can couple with the wireless temperature probe when the wireless temperature probe is placed on the support portion.

4. The cooking apparatus according to claim 3, **characterized in that** the support portion is defined on an outer surface of the housing, such that the wireless temperature probe can be placed on the outer surface of the housing.

5. The cooking apparatus according to claim 2, **characterized in that** an area of the first circuit board is smaller than an area of the second circuit board.

6. The cooking apparatus according to claim 1, **characterized in that** the charging assembly comprises a positive electrode connector and a negative electrode connector, the positive electrode connector is connected to the second power supply terminal, the negative electrode connector is grounded, and the second power supply terminal charges the wireless temperature probe when the positive electrode connector and the negative electrode connector are respectively connected to the wireless temperature probe; or,
the charging assembly comprises a wireless charging module and a wireless charging coil, the wireless charging module is respectively connected to the second power supply terminal and the wireless charging coil, and the wireless charging module drives the wireless charging coil to charge the wireless temperature probe when the wireless charging coil is coupled with the wireless temperature probe.

7. The cooking apparatus according to claim 6, **characterized in that** the charging assembly further comprises an in-position detection member, the in-position detection member is connected to the power module, and generates a first signal when in contact with the wireless temperature probe, and generates a second signal when separated from the wireless temperature probe.

8. The cooking apparatus according to claim 1, **characterized in that** the power module comprises a rectifier circuit and a voltage conversion circuit, the rectifier circuit is configured to rectify the alternating current mains and output direct current, and the voltage conversion circuit transforms the direct current and respectively outputs the first supply voltage and the second supply voltage; the first supply voltage and the second supply voltage are the same, and the first power supply terminal and the second power supply terminal are the same or different; or the first supply voltage and the second supply voltage are different, and the first power supply terminal and the second power supply terminal are different.

9. The cooking apparatus according to claim 8, **characterized in that** the voltage conversion circuit comprises a DC-DC conversion module and a linear voltage regulator module, the DC-DC conversion module is configured to transform the direct current and output a first voltage, the linear voltage regulator module is configured to transform the first voltage and output a second voltage and/or a third voltage, and the first supply voltage and the second supply voltage are any two of the first voltage, the second voltage, and the third voltage.

10. The cooking apparatus according to claim 1, **characterized in that** the first signal and the second signal are transmitted by the wireless communication module to a user terminal, the user terminal is configured to display that the wireless temperature probe is in a charging state in response to the first signal, and display power information of the wireless temperature probe in response to the second signal.

11. The cooking apparatus according to claim 1, **characterized in that** further comprising a main control module and a display screen assembly connected to the main control module, the first signal and the second signal are transmitted by the wireless communication module to a main control module, the main control module is configured to control the display screen assembly to display that the wireless temperature probe is in a charging state in response to the first signal, and control the display screen assembly to display power information of the wireless temperature probe in response to the second signal.

12. A cooking apparatus, comprising:
a housing, configured to enclose and form a cooking cavity; the housing has a support portion, and the support portion is configured to place a wireless temperature probe;
a heating assembly, configured to heat food in the cooking cavity;
a communication module, configured to acquire temperature detection information detected by the wireless temperature probe, the temperature detection information is configured to control a heating state of the heating assembly;
**characterized in that** a charging assembly, capable of coupling with the wireless temperature probe when the wireless temperature probe is placed on the support portion;
a power module, comprising an input terminal and a second power supply terminal, the input terminal of the power module is configured to connect to alternating current mains, the power module is configured to transform the alternating current mains to obtain a second supply voltage, and the second power supply terminal outputs the second supply voltage to the charging assembly, and charges the wireless temperature probe when the charging assembly is coupled with the wireless temperature probe.

13. The cooking apparatus according to claim 12, **characterized in that** the first signal and the second signal are transmitted by the wireless communication module to a user terminal, the user terminal is configured to display that the wireless temperature probe is in a charging state in response to the first signal, and display power information of the wireless temperature probe in response to the second signal.

14. The cooking apparatus according to claim 12, **characterized in that** further comprising a main control module and a display screen assembly connected to the main control module, the first signal and the second signal are transmitted by the wireless communication module to a main control module, the main control module is configured to control the display screen assembly to display that the wireless temperature probe is in a charging state in response to the first signal, and control the display screen assembly to display power information of the wireless temperature probe in response to the second signal.
